# EUROPÄISCHE PATENTSCHRIFT

(11) **EP 2 789 841 B1**
(45) Veröffentlichungstag und Bekanntmachung des Hinweises auf die Patenterteilung: **24.08.2016**
(21) Anmeldenummer: 14154723.2
(22) Anmeldetag: 11.02.2014
(51) Int. Cl.: F02M 51/06, F02M 61/08, F02M 61/20, F02M 61/16, F16K 31/06

(54) **Ventil zum Zumessen von Fluid**
Valve for measuring fluid
Vanne pour measurer de fluide

(30) Priorität: 11.04.2013 DE 102013206385
(43) Veröffentlichungstag der Anmeldung: 15.10.2014
(73) Patentinhaber: ROBERT BOSCH GMBH, 70442 Stuttgart (DE)
(72) Erfinder: Schmieder, Dietmar, 71706 Markgroeningen (DE); Landenfeld, Tilo, 71665 Vaihingen/Enz (DE)

(56) Entgegenhaltungen:
- EP-A1- 2 366 888
- DE-A1-102007 004 870
- DE-A1-102009 028 234

## Beschreibung

### Stand der Technik

Die Erfindung geht aus von einem Ventil zum Zumessen von Fluid nach dem Oberbegriff des Anspruchs 1, wobei der für ein strömendes oder fließendes Medium stehende übergeordnete Begriff Fluid in Übereinstimmung mit der Strömungslehre für Gase und Flüssigkeiten verwendet wird.

Bei einem sog. nach außen öffnenden, bekannten Einspritzventil (EP 2 366 888 A1) weist das Ventilgehäuse einen hohlzylindrischen Düsenkörper mit einem endseitig angeordneten, eine Düsenöffnung umschließenden Ventilsitz, einen Gehäusetopf, durch dessen Topfboden hindurch der Düsenkörper zentral in den Gehäusetopf hineinragt, und eine den Gehäusetopf abschließende Gehäusekappe mit Kappenmantel und Kappenboden auf, wobei im Kappenmantel ein Einlassstutzen für das Fluid angeordnet ist. Innerhalb des Gehäusetopfs sitzt auf dem Düsenkörper eine Magnetspule eines Elektromagneten. Eine Ringplatte aus nichtmagnetischem Material ist mit dem Magnettopf und dem Düsenkörper jeweils fluiddicht verbunden und schließt mit dem Topfboden des Gehäusetopfs einen gekapselten Spulenraum, in dem die Magnetspule einliegt, und mit der Gehäusekappe einen fluidgefüllten Ventilraum ein, in den der Düsenkörper hineinragt. Im Düsenkörper ist eine Ventilnadel axial verschieblich geführt, die endseitig einen mit dem Ventilsitz zusammenwirkenden Schließkopf trägt. Zwischen Ventilnadel und Zylindenivand des Düsenkörpers besteht ein Ringspalt, in dem das Fluid vom Ventilraum zur Zumessöffnung strömt. Ein auf der Ventilnadel befestigter Magnetanker des Elektromagneten begrenzt mit der aus dem Spulenraum vorstehenden Stirnfläche des Düsenkörpers einen Arbeitsluftspalt des Elektromagneten. Zwischen Magnetanker und Ringplatte stützt sich eine als Tellerfeder ausgebildete Ventilschließfeder ab, die auf den Magnetanker eine Kraft ausübt, die über die Ventilnadel den Schließkopf an den Ventilsitz anlegt. Im Ventilraum erstreckt sich zwischen dem schließkopffernen Ende der Ventilnadel und dem Kappenboden der Gehäusekappe eine Falten- oder Wellbalganordnung, die einen mit der Ventilnadel und dem Kappenboden dicht verbundenen Falten- oder Wellbalg und eine im Falten- oder Wellbalg angeordnete Kalibrierfeder aufweist. Die Kalibrierfeder stützt sich einerseits am Nadelende der Ventilnadel und andererseits an einem im Kappenboden axial verstellbaren Justierbolzen ab. Die Kalibrierfeder kann durch Verschieben des Justierbolzens in gewünschter Weise vorgespannt werden und beaufschlagt die Ventilnadel mit einer in Ventilöffnungsrichtung wirkenden Druckkraft. Der Durchmesser des Ventilsitzes und der hydraulische Durchmesser des Falten- oder Wellbalgsbalgs sind gleich groß, so dass die Ventilnadel für alle Fluiddrücke druckausgeglichen und das dynamische Verhalten des Ventils unabhängig vom Fluiddruck ist.

Aus der DE 10 2007 004 870 A1 ist bereits ein Ventil zum Zumessen von unter Druck stehendem Fluid bekannt, das mit einem Ventilgehäuse ausgebildet ist, das eine Zulauföffnung zum Zuführen und eine Zumessöffnung zum Abspritzen von Fluid aufweist. Das Ventil ist ein nach innen öffnendes Ventil und umfasst ein Ventilglied zum Freigeben und Verschließen wenigstens einer an einem Ventilsitz angeordneten Einspritzöffnung, ein mit dem Ventilglied verbundenes Betätigungselement und eine Vorspanneinrichtung, um eine Vorspannung auf das Ventilglied bereitzustellen, wobei die Vorspanneinrichtung einen mit Gas oder einem Vakuum gefüllten, elastischen Hohlkörper umfasst, dessen Außenseite mit dem zu steuernden Fluid in Verbindung steht, um eine Gegenkraft gegen eine Vorspannkraft der Vorspanneinrichtung bereitzustellen.

Eine weitere Ventilanordnung zur Kraftstoffhochdruckeinspritzung, umfassend eine nach aussen öffnende Ventilnadel wird in DE 10 2009 028 234 A offenbart.

Offenbarung der Erfindung Das erfindungsgemäße Ventil mit den Merkmalen des Anspruchs 1 hat den Vorteil, dass ein von einem elektromagnetischen Aktor gesteuertes, nach außen öffnendes Ventil zum Zumessen von Fluid in gedrungener Bauweise fertigungstechnisch günstig und kostensparend realisiert ist. Die Zusammensetzung des Ventilgehäuses erfordert nur einfach zu bearbeitende Teile. So kann das Ventilrohr tiefgezogen sein und die beiden Ventilkörper spanend bearbeitet werden. Die stoffschlüssige Verbindung der Ventilkörper mit dem Ventilrohr schafft einen fluiddichten Ventilraum für die Aufnahme von Ventilbauteilen. Die Verlagerung der als Druckfeder ausgebildeten Ventilschließfeder in den Innenraum des Magnetkerns und die Einbeziehung des elastischen Hohlkörpers in den zulaufseitigen Ventilkörper, der zugleich zu einem in eine Anschlusstasse einer Fluidzuführleitung einzusteckenden Anschlussstutzen ausgeformt ist, reduziert die axiale Länge des Ventils und die Bauhöhe einer Fluidzumess- oder -einspritzanlage, die insbesondere mehrere an der Fluidzuführleitung angeschlossene Ventile aufweist. Durch den eine Gasfüllung oder ein Vakuum enthaltenden, elastischen Hohlkörper wird der auf den Schließkopf in Ventilöffnungsrichtung wirkende Fluiddruck annähernd kompensiert, und zwar unabhängig von wechselnden Fluiddrücken. Dadurch kann die Schließkraft der Druckfeder reduziert und die Druckfeder kleiner ausgebildet werden. Eine kleine Ventilschließkraft reduziert die zum Öffnen des Ventils erforderliche Druckkraft des Elektromagneten, so dass ein leistungsschwächerer und damit baukleinerer Elektromagnet eingesetzt werden kann. Dies alles unterstützt das Ziel einer kleinen Bauform des Ventils.

Durch die in den weiteren Ansprüchen aufgeführten Maßnahmen sind vorteilhafte Weiterbildungen und Verbesserungen des im Anspruch 1 angegebenen Ventils möglich.

Gemäß einer vorteilhaften Ausführungsform der Erfindung ist die Druckfeder als Schraubendruckfeder oder als Rohrfeder ausgebildet. Ausführungsbeispiele für eine solche Rohrfeder sind der DE 103 19 599 A1 beschrieben.

Gemäß einer vorteilhaften Ausführungsform der Erfindung ist der elastische Hohlkörper, der vorzugsweise ein metallischer Falten- oder Wellbalg aus Edelstahl ist, mittels eines an der Ventilnadel befestigten Zwischenstücks und eines im zulaufseitigen Ventilkörper fluiddicht festgelegten Verschlussglieds endseitig dicht verschlossen. Im Hohlkörper ist eine Füllung mit einem Gas mit kleiner Wärmeausdehnung oder ein Vakuum vorhanden. Im Verschlussglied ist die Zulauföffnung des Ventils mittels einer Durchgangsbohrung realisiert, so dass das über die Durchgangsbohrung einströmende Fluid den elastischen Hohlkörper in seiner gesamten Axiallänge beaufschlagt. Dadurch, dass der hydraulisch Durchmesser des Hohlkörpers und der Durchmesser des Ventilsitzes annähernd gleich groß sind, ist die Ventilnadel, unabhängig von wechselnden Fluiddrücken, stets ungefähr druckausgeglichen.

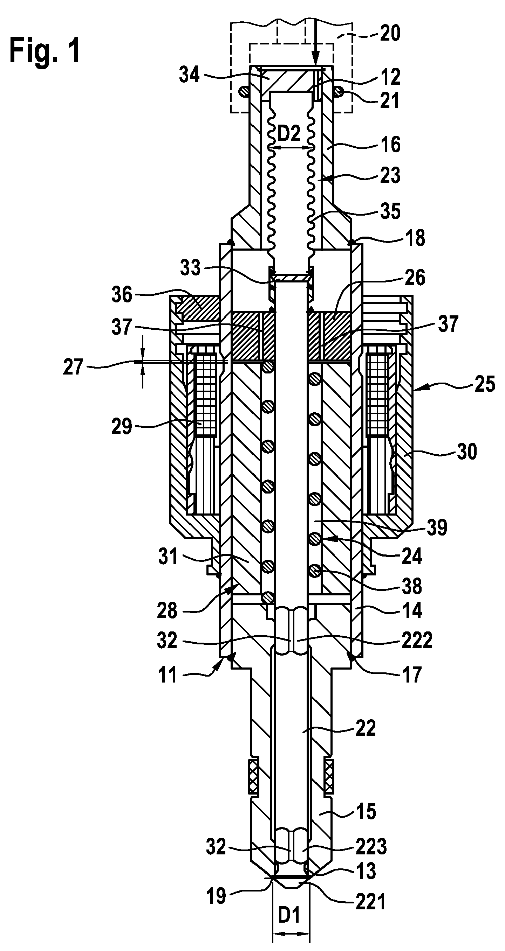

### Kurze Beschreibung der Zeichnung

Die Erfindung ist anhand eines in der Zeichnung dargestellten Ausführungsbeispiels in der nachfolgenden Beschreibung näher erläutert. Dabei zeigt die Zeichnung einen Längsschnitt eines Ventils zum Zumessen von Fluid.

Das in der Zeichnung im Schnitt dargestellte Ventil zum Zumessen von unter Druck stehendem Fluid wird beispielsweise zum Einspritzen von Kraftstoff in den Brennraum einer Brennkraftmaschinen oder in einen zum Brennraum der Brennkraftmaschine führenden Ansaugkanal eingesetzt. Es kann jedoch auch als Einblasventil zum dosierten Zumessen von Gasmengen bei Gasmotoren verwendet werden.

Das Ventil weist ein Ventilgehäuse 11 mit einer Zulauföffnung 12 zum Zuführen von Fluid und einer Zumessöffnung 13 zum dosierten Abspritzen von Fluid auf. Das Ventilgehäuse 11 ist aus einem Ventilrohr 14, einem mit dem Ventilrohr 14 an dessen einem Rohrende fluiddicht verbundenen, hohlen, zumessseitigen Ventilkörper 15 und einem mit dem Ventilrohr 14 an dessen anderem Ende fluiddicht verbundenen, hohlen, zulaufseitigen Ventilkörper 16 zusammengesetzt. Die fluiddichte Verbindung ist mittels Stoffschlusses hergestellt, z.B. durch die umlaufenden Schweißnähte 17, 18. Im zumessseitigen Ventilkörper 15 ist endseitig die Zumessöffnung 13 und ein die Zumessöffnung 13 umschließender Ventilsitz 19 mit nach außen in Abpritzrichtung weisender Sitzfläche ausgebildet. Der zulaufseitige Ventilkörper 16 weist die Zulauföffnung 12 auf. Er ist zu einem Anschlussstutzen geformt, der in eine liniert angedeutete Anschlusstasse 20 einer Zuführleitung für das Fluid, einer sog. Rail, eingesteckt und darin mittels eines Dichtungsrings 21 abgedichtet. Das Ventil weist eine mit einem Schließkopf 221 versehene, langgestreckte, dünne Ventilnadel 22 auf, die mittels eines am schließkopffernen Ende der Ventilnadel 22 mit der Ventilnadel 22 verbundenen, dem Fluiddruck ausgesetzten elastischen Hohlkörper 23 druckausgeglichen ist. Dabei bedeutet "druckausgeglichen", dass die auf den Schließkopf 221 in Öffnungsrichtung wirkende Druckkraft des Fluids durch die vom Hohlkörper 23 unter Fluiddruckeinwirkung an der Ventilnadel 22 erzeugte Zugkraft annähernd kompensiert wird. Der elastischen Hohlkörper 23 ist koaxial zur Ventilnadel 22 ausgerichtet und in dem zulaufseitigen Ventilkörper 16 aufgenommen. An der Ventilnadel 22 greift eine Ventilschließfeder 24 an, die den Schließkopf 221 auf den Ventilsitz 19 aufsetzt. Zum Abheben des Schließkopfs 221 vom Ventilsitz 19 gegen die Schließkraft der Ventilschließfeder 24 dient ein Elektromagnet 25. Der Elektromagnet 25 weist in bekannter Weise einen mit der Ventilnadel 22 verbundenen Magnetanker 26 mit Axialkanälen 37 für den Fluiddurchtritt, einen mit dem Magnetanker 26 einen Arbeitsluftspalt 27 einschließenden Innenpol 28, eine Magnetspule 29 und einen die Magnetspule 29 umschließenden Magnettopf 30 auf. Der Magnettopf 30 ist mit einem durchmesserkleineren Topfabschnitt außen auf dem Ventilrohr 14 festgelegt und über ein an seiner Topföffnung gelegenes, ferromagnetisches Rückschlussjoch 36 an das Ventilrohr 15 angekoppelt. Der Innenpol 28 wird von einem hohlzylindrischen Magnetkern 31 gebildet, der innen am Ventilrohr 14 festgelegt ist und einen Nadelabschnitt der Ventilnadel 22 umschließt. Die Ventilschließfeder 24 ist als Druckfeder, z.B. als zylinderförmige Schraubendruckfeder 38 oder als Rohrfeder, ausgebildet, die in dem zwischen Magnetkern 31 und Ventilnadel 22 vorhandenen Ringraum 37, den im Magnetkern 31 verlaufenden Nadelabschnitt der Ventilnadel 22 konzentrisch umschließend, angeordnet ist und sich am zumessseitigen Ventilkörper 15 und am Magnetanker 26 abstützt. Die Ventilnadel 22 ist mittels zweier Gleitabschnitte 222, 223 im zumessseitigen Ventilkörper 16 axial verschieblich geführt. Die Gleitabschnitte 222, 223 sind mit Axialnuten 35 für den Durchtritt des Fluids versehen.

Der koaxial zur Ventilnadel 22 ausgerichtete, elastische Hohlkörper 23, der vorzugsweise als metallischer Falten- oder Wellbalg 35 aus Edelstahl ausgebildet ist, ist an einem Ende mit einem Zwischenstück 33 und am anderen Ende mit einem Verschlussglied 34 hermetisch abgeschlossen und weist eine Füllung mit einem Gas mit geringer Wärmeausdehnung oder ein Vakuum auf. Das Zwischenstück 33 ist am schließkopffernen Ende der Ventilnadel 22 befestigt und das Verschlussglied 34 in den vom Ventilrohr 14 abgekehrten Endabschnitt des zulaufseitigen Ventilkörpers 16 fluiddicht eingesetzt. In das Verschlussglied 34 ist die Zulauföffnung 12 in Form einer axialen Durchgangsbohrung eingebracht. Die dichte Verbindung von Zwischenstück 33 und Verschlussglied 34 mit dem metallischen Falten- oder Wellbalg 35 erfolgt wiederum durch Stoffschluss. Ebenso wird die Verbindung des Zwischenstücks 33 mit der Ventilnadel 22 und des Verschlussglieds 34 mit dem zulaufseitigen Ventilkörper 16 durch Stoffschluss hergestellt. Der elastische Hohlkörper 23 weist einen hydraulischen Durchmesser D2 auf, der zumindest annähernd gleich dem Durchmesser D1 des Ventilsitzes 19 ist. Unter hydraulischem Durchmesser D2 wird dabei ein Durchmesser verstanden, an dem das unter Druck stehende Fluid über die gesamte axiale Länge des elastischen Hohlkörpers 23 bzw. des Falten- oder Wellbalgs 35 angreift. Der Druck des Fluids auf den Falten- oder Wellbalg 35 wird durch den Falten- oder Wellbalg 35 in eine am schließkopffernen Ende der Ventilnadel 22 angreifende Zugkraft umgesetzt, die den Schließkopf 221 an den Ventilsitz 19 anlegt.

## Patentansprüche

1. Ventil zum Zumessen von unter Druck stehendem Fluid mit einem Ventilgehäuse (11), das eine Zulauföffnung (12) zum Zuführen von Fluid und eine Zumessöffnung (13) zum Abspritzen von Fluid aufweist, mit einem am Ventilgehäuse (11) ausgebildeten, die Zumessöffnung (13) umschließenden Ventilsitz (19) mit in Abspritzrichtung weisender Sitzfläche, mit einer einen Schließkopf (221) tragenden Ventilnadel (22), die mittels eines am schließkopffernen Ende der Ventilnadel (22) mit der Ventilnadel (22) verbundenen, dem Fluiddruck ausgesetzten, elastischen Hohlkörper (23) druckausgeglichen ist, mit einer an der Ventilnadel (22) angreifenden Ventilschließfeder (24), die den Schließkopf (221) an den Ventilsitz (19) anlegt, und mit einem Elektromagneten (25), der auf die Ventilnadel (22) eine den Schließkopf (221) vom Ventilsitz (19) nach außen abhebende Druckkraft aufbringt und hierzu einen mit der Ventilnadel (22) verbundenen Magnetanker (26), einen mit dem Magnetanker (26) einen Arbeitsluftspalt (27) einschließenden Innenpol (28), eine Magnetspule (29) und einen die Magnetspule (29) umschließenden Magnettopf (30) aufweist, **dadurch gekennzeichnet, dass** das Ventilgehäuse (11) ein Ventilrohr (14), ein mit dem Ventilrohr (14) an dessen einem Rohrende fluiddicht verbundenen, hohlen, zumessseitigen Ventilkörper (15), in dem Ventilsitz (19) und Zumessöffnung (13) ausgebildet sind und die Ventilnadel (22) gleitgeführt ist, und einen mit dem Ventilrohr (14) an dessen anderem Ende fluiddicht verbundenen, hohlen, zulaufseitigen Ventilkörper (16) aufweist, in dem die Zulauföffnung (12) ausgebildet und der Hohlkörper (23) aufgenommen ist, und dass der Magnettopf (30) mit Magnetspule (29) außen auf dem Ventilrohr (14) festgelegt ist, dass der Innenpol (28) von einem innen am Ventilrohr (14) festgelegten, einen Nadelabschnitt der Ventilnadel (22) umschließenden, hohlzylindrischen Magnetkern (31) gebildet ist und dass die Ventilschließfeder (24) eine Druckfeder ist, die in einem zwischen dem Magnetkern (31) und dem von diesem umschlossenen Nadelabschnitt der Ventilnadel (22) vorhandenen Ringraum (39) angeordnet ist und sich am zumessseitigen Ventilkörper (15) und am Magnetanker (26) abstützt.

2. Ventil nach Anspruch 1, **dadurch gekennzeichnet, dass** die Druckfeder eine zylindrische Schraubendruckfeder (38) ist.

3. Ventil nach Anspruch 1, **dadurch gekennzeichnet, dass** die Druckfeder eine Rohrfeder ist.

4. Ventil nach einem der Ansprüche 1 bis 3, **dadurch gekennzeichnet, dass** der elastische Hohlkörper (23) mittels eines an der Ventilnadel (22) befestigten Zwischenstücks (33) und eines im zulaufseitigen Ventilkörper (16) fluiddicht festgelegten Verschlussglieds (34) jeweils endseitig dicht verschlossen ist und die Zulauföffnung (12) im Verschlussglied (34) in Form von mindestens einer axialen Durchgangsbohrung realisiert ist.

5. Ventil nach Anspruch 4, **dadurch gekennzeichnet, dass** im Hohlkörper (23) eine Gasfüllung oder ein Vakuum vorhanden ist.

6. Ventil nach einem der Ansprüche 1 bis 5, **dadurch gekennzeichnet, dass** der Hohlkörper (23) ein Falten- oder Wellbalg (35) aus Metall, vorzugsweise aus Edelstahl, ist.

7. Ventil nach Anspruch 6, **dadurch gekennzeichnet, dass** das Zwischenstück (33) und das Verschlussglied (34) jeweils stoffschlüssig dicht mit dem Falten- oder Wellbalg (35) verbunden sind.

8. Ventil nach Anspruch 6 oder 7, **dadurch gekennzeichnet, dass** der hydraulische Durchmesser (D2) des Falten- oder Wellbalgs (35) und der Durchmesser (D1) des Ventilsitzes (19) zumindest annähernd gleich groß sind.

9. Ventil nach einem der Ansprüche 1 bis 8, **dadurch gekennzeichnet, dass** der zulaufseitige Ventilkörper (16) zu einem in eine Anschlusstasse (20) zur Fluidzuführung einsteckbaren Anschlussstutzen geformt ist.

## Claims

1. Valve for the metering of pressurized fluid, having a valve housing (11) which has an inflow opening (12) for the supply of fluid and has a metering opening (13) for the ejection of fluid, having a valve seat (19) which is formed on the valve housing (11) and which surrounds the metering opening (13) and which has a seat surface pointing in the ejection direction, having a valve needle (22) which bears a closing head (221) and which is pressure-balanced by way of an elastic hollow body (23), which elastic hollow body is connected to the valve needle (22) at an end of the valve needle (22) remote from the closing head and is exposed to the fluid pressure, having a valve closing spring (24) which engages on the valve needle (22) and which forces the closing head (221) into contact with the valve seat (19), and having an electromagnet (25) which exerts on the valve needle (22) a pressure force which lifts the closing head (221) from the valve seat (19) in an outward direction, and, for this purpose, said electromagnet has a magnet armature (26) connected to the valve needle (22), said electromagnet has an inner pole (28) which together with the magnet armature (26) encloses a working air gap (27), said electromagnet has a magnet coil (29), and said electromagnet has a magnet pot (30) surrounding the magnet coil (29), **characterized in that** the valve housing (11) has a valve tube (14), the valve housing has a hollow, metering-side valve body (15) which is connected in fluid-tight fashion to the valve tube (14) at one tube end thereof, in which valve body the valve seat (19) and metering opening (13) are formed and the valve needle (22) is slidingly guided, and the valve housing has a hollow, inflow-side valve body (16) which is connected in fluid-tight fashion to the valve tube (14) at the other end thereof, in which valve body the inflow opening (12) is formed and the hollow body (23) is received, and **in that** the magnet pot (30) with magnet coil (29) is fixed to the outside of the valve tube (14), **in that** the inner pole (28) is formed by a hollow cylindrical magnet core (31) which is fixed to the inside of the valve tube (14) and which surrounds a needle section of the valve needle (22), and **in that** the valve closing spring (24) is a compression spring, which compression spring is arranged in a ring-shaped chamber (39) provided between the magnet core (31) and that needle section of the valve needle (22) which is surrounded by said magnet core, and which compression spring is supported on the metering-side valve body (15) and on the magnet armature (26).

2. Valve according to Claim 1, **characterized in that** the compression spring is a cylindrical helical compression spring (38).

3. Valve according to Claim 1, **characterized in that** the compression spring is a tubular spring.

4. Valve according to one of Claims 1 to 3, **characterized in that** the elastic hollow body (23) is sealingly closed off at each end side by way of an intermediate piece (33) fastened to the valve needle (22) and by way of a closure element (34) which is fixed in fluid-tight fashion in the inflow-side valve body (16), and the inflow opening (12) in the closure element (34) is realized in the form of at least one axial passage bore.

5. Valve according to Claim 4, **characterized in that** a gas charge or a vacuum is provided in the hollow body (23).

6. Valve according to one of Claims 1 to 5, **characterized in that** the hollow body (23) is a corrugated or undulating bellows (35) composed of metal, preferably of high-grade steel.

7. Valve according to Claim 6, **characterized in that** the intermediate piece (33) and the closure element (34) are each sealingly connected in cohesive fashion to the corrugated or undulating bellows (35).

8. Valve according to Claim 6 or 7, **characterized in that** the hydraulic diameter (D2) of the corrugated or undulating bellows (35) and the diameter (D1) of the valve seat (19) are at least approximately equal.

9. Valve according to one of Claims 1 to 8, **characterized in that** the inflow-side valve body (16) is shaped to form an attachment connector that can be inserted into an attachment socket (20) for the supply of fluid.

## Revendications

1. Soupape de dosage de fluide sous pression comprenant un boîtier de soupape (11) qui présente une ouverture d'alimentation (12) pour l'alimentation en fluide et une ouverture de dosage (13) pour pulvériser du fluide, comprenant un siège de soupape (19) réalisé sur le boîtier de soupape (11), entourant l'ouverture de dosage (13), avec une surface de siège tournée dans la direction de pulvérisation, avec un pointeau de soupape (22) portant une tête de fermeture (221), lequel est équilibré en pression au moyen d'un corps creux élastique (23) connecté au pointeau de soupape (22) au niveau de l'extrémité du pointeau de soupape (22) éloignée de la tête de fermeture, exposé à la pression de fluide, avec un ressort de fermeture de soupape (24) venant en prise avec le pointeau de soupape (22), qui applique la tête de fermeture (221) contre le siège de soupape (19), et avec un électroaimant (25) qui applique sur le pointeau de soupape (22) une force de pression soulevant vers l'extérieur la tête de fermeture (221) du siège de soupape (19) et qui présente à cet effet un induit magnétique (26) connecté au pointeau de soupape (22), un pôle interne (28) formant un entrefer de travail (27) avec l'induit magnétique (26), une bobine magnétique (29) et un pot magnétique (30) entourant la bobine magnétique (29), **caractérisée en ce que** le boîtier de soupape (11) présente un tube de soupape (14), un corps de soupape creux (15), côté dosage, connecté de manière étanche aux fluides au tube de soupape (14) au niveau de l'une de ses extrémités de tube, dans lequel sont réalisés le siège de soupape (19) et l'ouverture de dosage (13) et dans lequel est guidé de manière coulissante le pointeau de soupape (22) et un corps de soupape creux (16), côté alimentation, connecté au tube de soupape (14) de manière étanche aux fluides au niveau de son autre extrémité, dans lequel est réalisée l'ouverture d'alimentation (12) et dans lequel est reçu le corps creux (23) et **en ce que** le pot magnétique (30) est fixé à la bobine magnétique (29) à l'extérieur sur le tube de soupape (14), **en ce que** le pôle intérieur (28) est formé par un noyau magnétique cylindrique creux (31) fixé à l'intérieur au niveau du tube de soupape (14), entourant une portion de pointeau du pointeau de soupape (22) et **en ce que** le ressort de fermeture de soupape (24) est un ressort de compression qui est disposé dans un espace annulaire (39) prévu entre le noyau magnétique (31) et la portion de pointeau du pointeau de soupape (22) entourée par celui-ci et s'appuie contre le corps de soupape côté dosage (15) et contre l'induit magnétique (26).

2. Soupape selon la revendication 1, **caractérisée en ce que** le ressort de compression est un ressort de compression hélicoïdal cylindrique (38).

3. Soupape selon la revendication 1, **caractérisée en ce que** le ressort de compression est un ressort tubulaire.

4. Soupape selon l'une quelconque des revendications 1 à 3, **caractérisée en ce que** le corps creux élastique (23) est à chaque fois fermé de manière étanche du côté de l'extrémité au moyen d'une pièce intermédiaire (33) fixée au pointeau de soupape (22) et d'un organe de fermeture (34) fixé de manière étanche aux fluides dans le corps de soupape côté alimentation (16) et l'ouverture d'alimentation (12) est réalisée dans l'organe de fermeture (34) sous la forme d'au moins un alésage traversant axial.

5. Soupape selon la revendication 4, **caractérisée en ce qu'**un remplissage de gaz ou un vide est prévu dans le corps creux (23).

6. Soupape selon l'une quelconque des revendications 1 à 5, **caractérisée en ce que** le corps creux (23) est un soufflet à plis ou ondulé (35) en métal, de préférence en acier spécial.

7. Soupape selon la revendication 6, **caractérisée en ce que** la pièce intermédiaire (33) et l'organe de fermeture (34) sont à chaque fois connectées de manière étanche par engagement par liaison de matière au soufflet à plis ou ondulé (35).

8. Soupape selon la revendication 6 ou 7, **caractérisée en ce que** le diamètre hydraulique (D2) du soufflet à plis ou ondulé (35) et le diamètre (D1) du siège de soupape (19) sont au moins approximativement identiques.

9. Soupape selon l'une quelconque des revendications 1 à 8, **caractérisée en ce que** le corps de soupape côté alimentation (16) est formé en une tubulure de raccordement pouvant être enfichée dans une coupelle de raccordement (20) en vue de l'alimentation en fluide.
